# EUROPEAN PATENT SPECIFICATION

(11) **EP 0 321 506 B1**
(45) Date of publication and mention of the grant of the patent: **14.04.1993**
(21) Application number: 88900913.0
(22) Date of filing: 11.12.1987
(51) Int. Cl.: G03B 27/60

(54) **AUTOMATICALLY OPERATED VACUUM FEED AND HOLD DOWN ASSEMBLY FOR CAMERA SYSTEM**
AUTOMATISCH ARBEITENDE HALTER- UND ZUFÜHRVORRICHTUNG FÜR EIN KAMERASYSTEM
UNITE DE MAINTIEN ET D'ALIMENTATION DE VIDE A FONCTIONNEMENT AUTOMATIQUE POUR SYSTEME DE CAMERA

(30) Priority: 25.06.1987 US 65670
(43) Date of publication of application: 28.06.1989
(73) Proprietor: ITEK GRAPHIX CORP., Waltham Massachusetts 02254 (US)
(72) Inventor: LEIN, Juergen, West Henrietta, NY 14586 (US)
(74) Representative: Gossel, Hans K., Dipl.-Ing.
(86) International application number: US8703345
(87) International publication number: WO8810447

(56) References cited:
- US-A- 4 640 610

## Description

The commercial appeal of a daylight camera that could automatically remove film from a storage receptacle, cut same to length, expose same, and transport the exposed film to a developer station has long been recognized. However, such objective has not yet been realized, although progress has been made in this quest by numerous conventional graphic arts systems. As an example, U.S Patent 4,089,603 granted May 16, 1978 to Robert D. Jacobs, and now assigned to Itek Graphix Corp. of Waltham, Massachusetts, discloses a high speed vacuum support assembly for platemakers. The apparatus includes a first cover plate assembly having a transparent cover plate, and a second backing plate assembly including a relatively flexible backing sheet. The cover plate assembly is driven, by a motor, into contact with the photosensitive sheet supported therebetween, so that an airtight chamber is defined therebetween. The airtight chamber is evacuated (by a vacuum source) so that the flexible backing plate will be sucked toward the cover plate assembly, and drive the photosensitive sheet into film contact with the transparent cover plate.

U.S. Patent 4,408,872, granted October 11, 1983 to Quentin D. Vaughan, and assigned to Visual Graphics Corporation of Tamarac, Florida discloses a vertically oriented, daylight camera system of particular relevance. This patent discloses a system in which a camera supports a table along which a cassette carriage is manually propelled. The carriage serves to store, and feed out, lengths of photosensitive material into a camera exposure station.

A source of vacuum acting between a sheet of flexible, opaque plastic material and a translucent glass platen for the camera at the exposure station causes the film to be flattened against the platen prior to film exposure. Thereafter, vacuum is broken by movement of the carriage, and the exposed film is urged into the nip of rollers which carry the film through a developing station supported by the table. The exposed film is advanced toward the developing station by a brush-like member which picks up the trailing edge of the film; the brush-like member is secured beneath carriage 26.

U.S. Patent 4,479,710, granted October 30, 1984 to Quentin D. Vaughan, discloses refinements in the daylight camera system disclosed in U.S. Patent 4,408,872, also granted to Quentin D. Vaughan and assigned to Visual Graphics Corporation of Tamarac, Florida. For example, U.S. Patent 4,479,710 discloses protuberances formed on the underside of the flexible, opaque plastic sheet that is advanced by the manually operated cassette carriage across the platen of the camera; the protuberances insure smooth passage of the photosensitive material as it slides across the platen beneath the plastic sheet. U.S. Patent 4,479,710 also discloses an elongated vacuum bar that assists in removing air from beneath the plastic sheet, as well as elongated plastic strips that enable the plastic sheet to be more easily lifted from the platen after the vacuum draw-down is terminated.

While the two patents granted to Quentin D. Vaughan represent improvements over previously known graphic arts systems, the Vaughan cameras rely upon manual operation of a cassette carriage in order to advance a length of photosensitive material, cut same to length, and advance the exposed film to a processing station. The back and forth movement of the cassette carriage across the table of the camera requires the continued presence of an operator, and increases the cost of operating the camera. The need to move the carriage in finite steps, to distinct locations on the table of the camera, calls for careful operation of the camera system, and reduces, potentially, the operational speed of the system. Also, to maintain the light-tight characteristic of the daylight camera system, Vaughan relies upon an elongated, flexible opaque sheet of plastic that is unwound from a roller situated at the rear of the cassette carriage; the effectiveness of this seal may diminish after extended use and stray light may enter the camera system. U. S. Patent 4,640,610 granted on 3rd February 1987 to Hougaard and Rasmussen and assigned to Eskofot A/S discloses a camera combination with a vacuum feed and hold down assembly. The invention relates to such a camera combination with a vacuum feed and hold down assembly which is characterized by the features as disclosed in the characterizing part of claim 1.

### SUMMARY OF THE INVENTION

The present invention sets forth a vacuum feed assembly for daylight camera system that automatically withdraws a length of photosensitive material from a supply roll, pauses while the material is cut to length, centers the sheet of material cut to length on the platen of the camera, assists in drawing-down the photosensitive material against the platen, and then lifts and advances the exposed sheet of photosensitive material (cut to size) to the processing section of the camera. The vacuum feed assembly includes a transport belt with two apertures defined therethrough; an air manifold block, with two vertical channels and a central bore, is operatively associated with the transport belt. An air hose is secured to the manifold block, and introduces suction pressure through the apertures to the photosensitive material being transported by the belt.

The transport belt is opaque, flexible and keeps stray light from passing through the platen of the camera. The belt is wider than the platen to increase its effectiveness, and extends between a first roller at one end of the platen and a second roller at the opposite end of the platen. The belt is compliant and conforms to the curvature of the roller about which it is being wrapped.

A vacuum pick-up bar is secured to the upper surface of the transport belt and travels therewith. The bar extends across the width of the belt, and the ends of the bar rest on a pair of spaced C-shaped tracks. Lifting links join the tracks to a rigid lifting frame that surrounds the tracks. A lift motor operates a drive link that raises the tracks and elevates the manifold block and belt, and the photosensitive material positioned therebelow. This precise raising and lowering operation takes place automatically, and at the desired points, in the cycle of operation for the daylight camera system.

A rigid belt frame is provided for the transport belt. Such frame includes three cross-members, including one that supports the lift motor, and two side frames. Four adjustable feet, one at each corner of the rectangular belt frame, keep the belt frame parallel to the glass platen of the camera and enhance the quality of the exposure.

A chain extends about sprockets secured to the exterior of one of the side frames of the rigid belt frame, whereas the transport belt, and the rollers for the transport belt, are situated within the confines of the belt frame. A reversible motor drives the sprockets and advances the chain; the movement of the train is transmitted to both of the rollers about which the transport belt is secured. The roller winds up, or pays out, the transport belt. Lugs on the chain cooperate with switches on the side frame to control the travel of the transport belt.

A large, generally rectangular main frame extends about the belt frame. The main frame is hinged to the frame of the camera system, and can be pivoted upwardly to provide access to the transport belt assembly, the rigid belt frame, etc. An air cylinder is provided to retain the main frame in its opened position, and to permit the gradual lowering thereof.

The above-described vacuum feed assembly realizes its stated objective of automatically withdrawing photosensitive material, cutting same to a desired length, centering the sheet of material on a glass platen, uniformly drawing down the sheet of material against the platen of the camera, and picking up the exposed sheet material (cut to length) of photosensitive material, and advancing same onto the nip of rollers that will introduce the exposed material to a developing or processing station. Realization of this objective presages significant commercial appeal for the resultant daylight camera system utilizing this vacuum feed system, for cost associated with manufacturing and operating this camera will be significantly reduced while the quality of the photographic exposure will be enhanced.

Numerous other advantages, and favorable attributes of the vacuum feed assembly, will occur to the skilled artisan when the appended drawings are construed in harmony with the ensuing description of the invention.

### BRIEF DESCRIPTION OF THE DRAWINGS

FIG. 1 is a schematic front elevational representation of a camera system within which the instant vacuum feed and hold down assembly may be utilized;
FIG. 2 is an exploded perspective view of a vacuum feed and hold down assembly constructed in accordance with the principles of this invention;
FIG. 3 is a fragmentary, top plan view of the transport belt of the vacuum feed and hold down assembly, such view being taken along line 3-3 in FIG. 2 and in the direction indicated;
FIG. 4 is a side elevational view of the drive chain for the vacuum feed and hold down assembly, such view being taken along line 4-4 in FIG. 3 and in the direction indicated;
FIG. 5 is a side elevational view of the lifting frame for the transport belt of the vacuum feed and hold down assembly, such view being taken along line 5-5 of FIG. 2 and in the direction indicated;
FIG. 6 is a transverse, cross-sectional view of the lifting frame, such view being taken along line 6-6 of FIG. 5 and in the direction indicated;
FIG. 7 is a fragmentary, bottom plan view of the transport belt, such view being taken along line 7-7 in FIG. 6 and in the direction indicated;
FIG. 8 is a schematic view of the sequence of operations performed by the vacuum feed assembly; and
FIG. 9 is a schematic representation of the pneumatic circuit employed within the vacuum feed and hold down assembly.

### DESCRIPTION OF THE PREFERRED EMBODIMENT

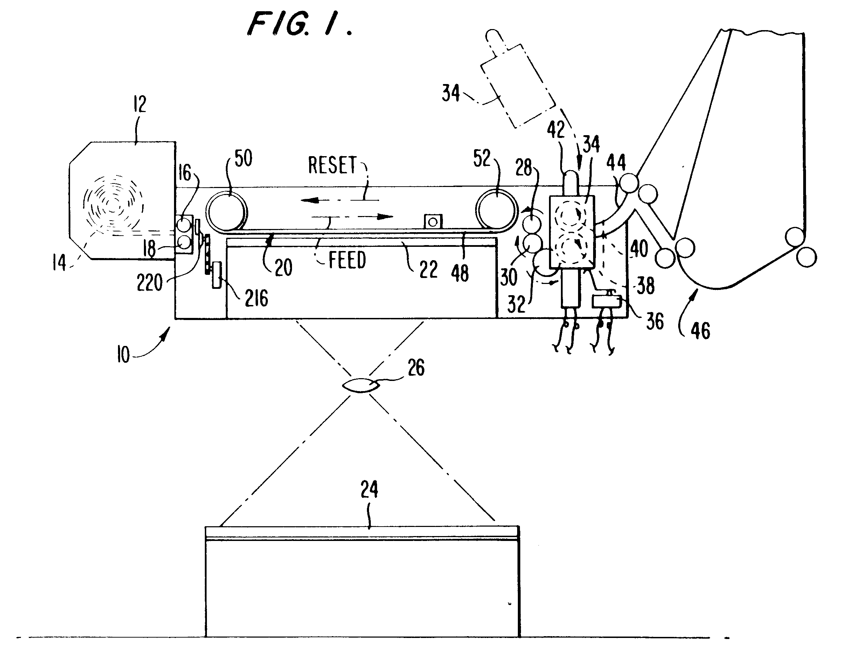

Turning now to the drawings, FIG. 1 depicts, in general schematic fashion, a known, vertical configuration for a daylight camera system 10 which may be adapted to receive, and utilize, the present invention.

Camera system 10 includes a receptacle to receive, and retain, a cassette 12 containing a roll 14 of photosensitive material. Rollers 16, 18 are driven by a small motor (not shown) to withdraw a length of photosensitive material. A predetermined length of photosensitive material is then cut by a knife blade (not shown), and a transport mechanism 20, such as a belt, advances the cut length of material onto a glass platen 22. The sheet of material, cut to length, is centered on the platen, and than is positively forced, or drawn down by suction, to press firmly against the platen.

Graphic material is arranged on illuminated copyboard 24, and the camera, represented by lens 26, is adjusted relative to the copyboard. An exposure is then achieved, and the image is recorded on the sized sheet of photosensitive material. The exposed sheet of photosensitive material is then advanced by the transport belt 48 into the nip defined between rollers 28, 30. Rollers are power driven by another small motor (not shown). A compound gear 32 is operatively associated with the rollers 28, 30.

When the operator wishes to make a plate for multiple impressions, a removable transfer cartridge 34 is inserted into the camera system to receive the exposed lengths of photosensitive materials. The cartridge, which trips a switch 36 when inserted into the system, uses gears 38, 40 to drive rollers (not shown) within the cartridge to take up the photosensitive material in light-tight enclosure. The cartridge is picked up by handle 42 and removed to an alternative process for completing the platemaking process.

Under usual conditions of operation, however, cartridge 34 will be absent, and the rollers 28, 30 will propel the sheet of exposed photosensitive material into guide 44, which leads into developer section 46.

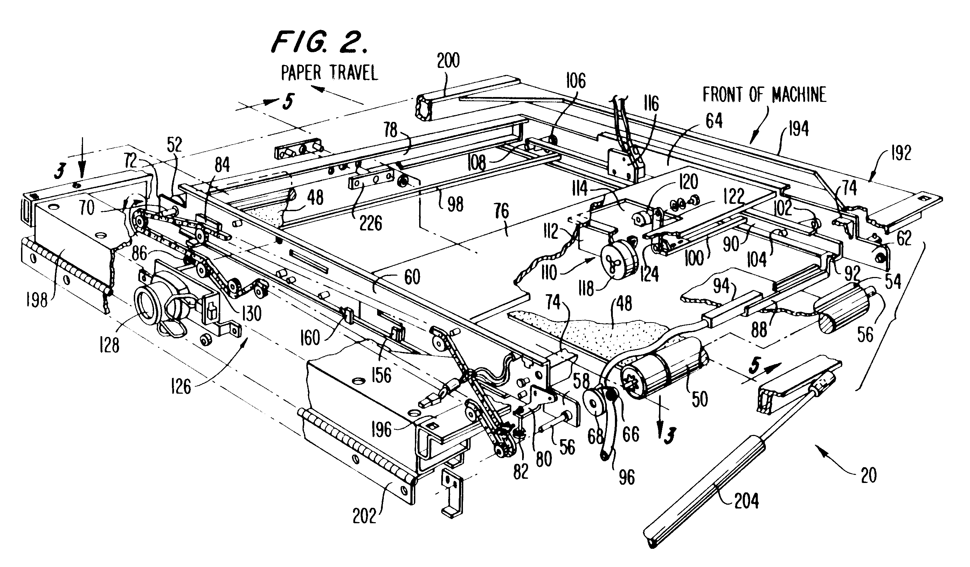

FIGS. 2-7, and particularly FIG. 2, depict the details of the vacuum feed assembly 20. In accordance with the principles of the present invention, the assembly 20 assumes the form of a belt 48 that extends between a first roller 50 and a second roller 52. One end of the belt fits within a groove 54 in roller 50, or is otherwise secured thereto, while the opposite end of belt 48 fits within a groove in roller 52, or is otherwise secured thereto. The belt is opaque, preferably black, and is longer and wider than the glass platen 22, to prevent stray light from entering the camera. The belt is a laminate of plastisol and polyester fabric, so that the belt can conform to the surface of the rollers 50, 52 as it is wrapped thereabout and to the platen support.

An elongated shaft 56 extends laterally through roller 50. One end of shaft 56 projects through an ear 58 on first side frame 60, while the opposite end of shaft 56 projects through an ear 62 on second, opposing side frame 64. A torsion spring 66 and a collar 68 are slipped onto shaft 56 so that an elastic coupling is formed between roller 50 and shaft 56.

An elongated shaft 70 extends laterally through roller 52. One end of shaft 70 projects through an ear 72 on first side frame 60, while the opposite end of shaft 70 projects through an ear (not shown) on opposing side frame 64. Roller 52 is pinned to shaft 70.

A rigid frame surrounds the belt 48. Such frame comprises a first side frame 60, and a second side frame 64; to maintain the side frames parallel, three cross-members are used to complete the frame. The first cross-member is indicated by reference numeral 74 and is situated close to roller 50, while a second, centrally located cross-member is indicated by reference numeral 76, and the third cross-member is designated 78. Cross-members 74 and 78 are similar in shape, while cross-member 76 is considerably larger in size.

A first L-shaped bracket 80 is secured to side frame 60 adjacent to ear 58, and a support foot 82 extends upwardly through the bracket. A second L-shaped bracket 84 is secured to side frame 60 adjacent to ear 72, and a support foot 86 extends upwardly through the bracket. A third support foot (not shown) is secured to ear 62 on side frame 64, and a fourth support foot is secured to another ear at the opposite end of side frame 64. The support feet are adjusted vertically so that the rigid belt frame, and the transport belt 48 associated therewith, can be maintained parallel to platen 22 (visible in FIG. 1, but not shown in FIG. 2).

A vacuum pick-up bar 88 is secured, by suitable adhesives, to the upper surface of belt 48. The bar is U-shaped when viewed in vertical cross-section; a first C-shaped track 90 is disposed interiorly of side frame 64. Track 90 extends longitudinally along the side frame between cross-members 74 and 78. An identical C-shaped track (not shown) is disposed interiorly of side frame 60. One end 92 of vacuum pick-up bar 88 rests upon, and travels along, track 90. The opposite end of vacuum bar 88 rests upon, and travels along, the companion track associated with side frame 60. The ends of the vacuum pick-up bar terminate in upstruck ears.

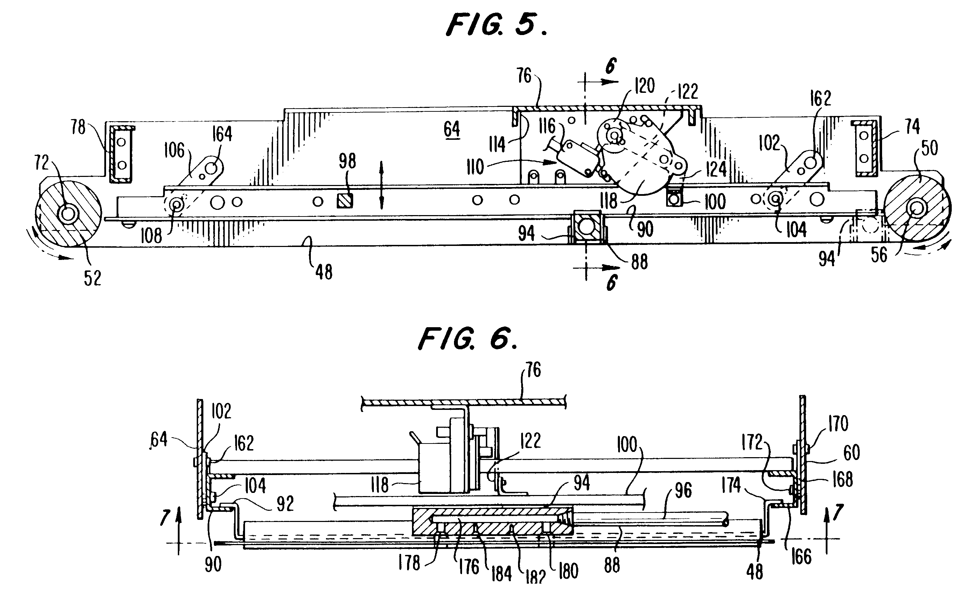

A rectangular manifold 94 is secured by screws 182, 184 (see FIG. 6) and adhesives to the upper surface of bar 88, and fits securely within the U-shaped confines of the bar. An air hose 96 is secured to the manifold to establish communication between a vacuum source and the interior of the manifold.

Spacer bars 98, 100 extend between track 90 and the companion track located interiorly of side frame 60. A first lift link 102 is secured to the interior of side frame 64, and a pin 104 at the lower end of link 102 projects through an opening in track 90. A second lift link 106 is also secured to the interior of track 90, and a pin 108 at the lower end of link 106 projects through another opening in track 90 near cross-member 78. A third and fourth lift link (not shown) are secured to the interior surface of side frame 60 in a similar manner; the four lift links enable the tracks and the vacuum pick-up bar 88 extending therebetween to move a limited distance in a direction that is perpendicular to the plane of belt 48.

The mechanism that lifts the C-shaped tracks relative to side frames 60, 64 is shown in FIG. 2 and is identified generally by reference character 110. Assembly 110 includes a bracket 112 that is located in proximity to a rectangular aperture 114 in cross-member 76. A switch 116 is secured to bracket 112, as suggested by the dashed lead lines, and a lift motor 118 is secured in proximity to the bracket. Switch 116 controls the "on" and "off" operation of lift motor 118. A cam 120 is mounted on the shaft of lift motor 118, and a drive link 122 has one end secured to an upstanding tab 124 that is secured to spacer bar 100. Lift motor 118, through the cam and its eccentric operation of drive link 122, is able to raise, and lower, the C-shaped tracks, which pivot about the lift links joined to side frames 60 and 64.

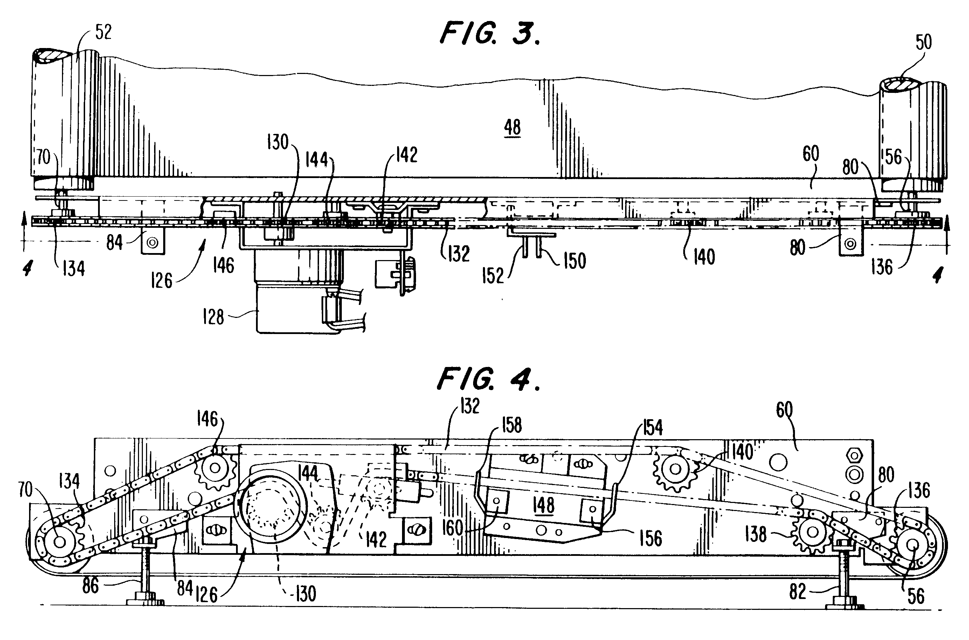

The mechanism that drives rollers 50 and 52, and thus controls the movement of belt 48 secured between these rollers, is identified generally by reference number 126. Mechanism 126 is shown in FIG. 2, on a reduced scale, but is amplified and shown on an enlarged scale in FIGS. 3 and 4. Mechanism 126 is situated on the exterior of side frame 60.

Mechanism 126 includes a reversible motor 128 that drives a main drive sprocket 130. The sprocket 130 drives an endless linked chain 132 that extends between a sprocket 134 secured to the end of shaft 70 and a sprocket 136 secured to the end of shaft 56. Additional sprockets 138, 140, 142, 144 and 146 guide the link chain and preclude excessive play or sag.

A mounting bracket 148 is secured to side frame 60 in proximity to chain 132. Lugs 150, 152 project outwardly from the chain. When the chain is advanced in one direction by motor 128, lug 150 contacts arm 154 on switch 156 on bracket 148 and closes such switch. The switch closure causes the motor 128 to reverse direction, and through drive sprocket 130, the chain is driven in the opposite direction. Such motion continues until lug 152 contacts arm 158 on switch 160 on bracket 148 and closes such switch. The driving of the chain in one direction moves belt 48 from roller 50 onto roller 52, while the driving of the chain in the opposite direction reverses the direction of movement of belt 48.

FIG. 5 reveals additional details of the mechanism 110 that lifts the C-shaped tracks that are connected by lift links to the side frame 60 and 64 of the rigid belt frame. For example, the C shape of track 90, which has an upper and lower flange, is visible; the vacuum pick-up bar 88 travels across the width of track 90 while suspended between the lower flange of track 90 and the lower flange of the identical track secured inboard of side frame 60. The details of links 102 and 106 are also shown; link 102 is secured to side frame 64 by pivot pin 162, while link 106 is secured to side frame 64 by pivot pin 164. Cross-members 78 and 74 are C-shaped beams when viewed in end elevation. Details of the mechanism 110 that lifts the track 90 and the companion track inboard of side frame 60 are also shown on a larger scale than FIG. 2. The feed out and return movement of rollers 50, 52 as belt 48 is paid out, and taken up, is shown by the directional arrows located adjacent to the rollers. Similarly, the vertically directed, up and down movement of the tracks, and the vacuum pick-up bar suspended therefrom, is indicated by the two-headed arrow.

FIG. 6 shows the C-shaped track 166 that is positioned inboard of side frame 60 and is joined thereto by a pair of lift links. Tracks 90 and 166 are identical in shape and function. The lift links for track 166 are aligned with the lift links 102, 106 for C-shaped track 90, so that the tracks, which are joined together by spacer bars 98, 100, are moved as a unit. One of the pair of lift links 168 is shown in FIG. 6; such link is secured to side frame 60 by pivot pin 170 at its upper end, while the lower end of the link has a pin 172 which projects through an opening in track 166.

One end 92 of vacuum pick-up bar 88 rests upon track 90, while the opposite end 174 of the vacuum bar 88 rests upon track 166. Manifold 94 is secured with screws and adhesive sealant to bar 88, and is seated within a channel defined on the bar. A central bore 176 receives one end of air hose 96; the bore communicates with a first vertical channel 178 and a second vertical channel 180.

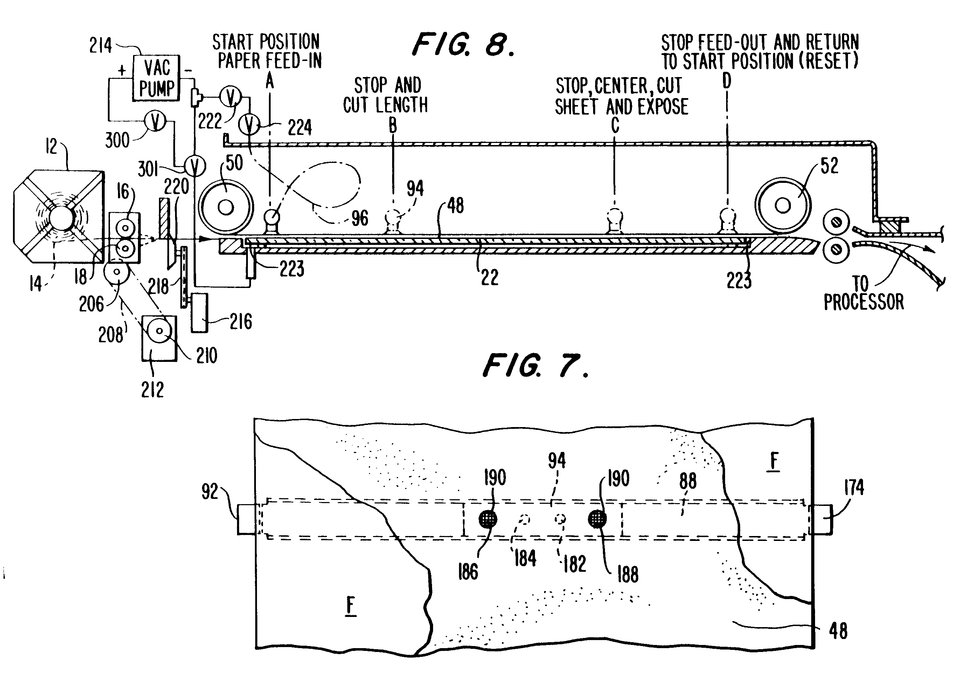

FIG. 7 shows the underside of transport belt 48, and the outline of the manifold 94 and vacuum pick-up bar 88 secured to the upper surface of the belt. The ends 92 and 174 of the vacuum pick-up bar 88, which project beyond the belt, for engagement with tracks 90, 166, are also visible.

Two openings 186, 188 are formed through the thickness of the belt, and the manifold 94 is secured to the belt 48 with channels 178 and 180 in alignment with the openings. Belt 48 is a laminate of plastisol and polyester fabric. The plastisol is removed, or omitted, in an area of the belt conforming in shape to the platen, but slightly larger in size. The polyester fabric appears as a mesh-screen 190 in FIG. 7. Mesh screen 190 extends across the openings 186, 188 so that the air flows through the belt. By virtue of this arrangement, a vacuum pump 214 (shown in FIG. 8) can deliver suction forces over air hose 96 to manifold 94 and thence through channels 178, 180 and aligned holes in the bar 88 and belt to the underside of the transport belt 48. The suction forces cause photosensitive material to adhere to belt 48, so that the belt can advance such material through successive steps in the operation of the daylight camera employing this film transport assembly. The channels need not be cylindrical over their entire length, but may widen out at their lower ends to form a larger air inlet area.

A rectangular, rigid main frame 192, comprising front channel 194, side channel 196, rear channel 198, and side channel 200 extends about the transport belt 48 and the related assemblies for advancing and returning such belt, as well as raising and lowering same, at appropriate times in the operational cycle of the camera system. A hinge 202 joins the main frame to the frame of the camera system, so that the main frame may be lifted upwardly to allow inspection, or repair, to the components housed therewithin. An air cylinder 204 retains the frame in its "up" position, and also controls its gradual downward motion toward its closed position.

### CYCLE OF OPERATION

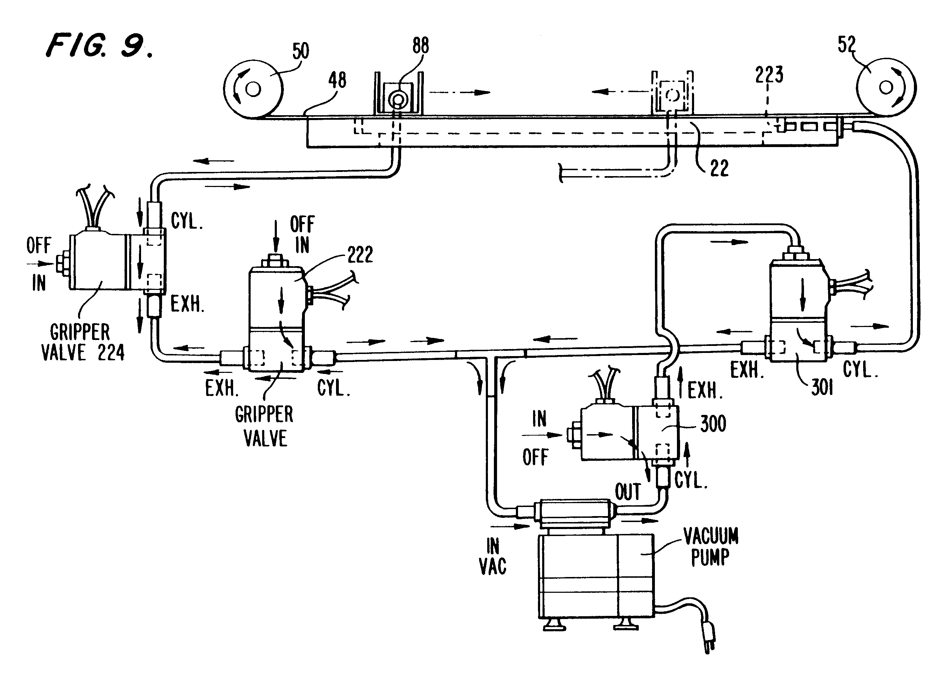

The sequence of operation for the above-described preferred embodiment of an automatically operated vacuum feed and hold down assembly system for a daylight camera is best understood by reference to FIGS. 8 and 9. Rollers 16, 18 withdraw a length of photosensitive material from roll 14 retained in cassette 12. The rollers are powered by gear 206, which is driven by chain 208 that passes about sprocket 210. A first motor 212 delivers power to sprocket 210.

The leading edge of photosensitive material F is advanced by rollers 16, 18 beyond roller 50 and onto platen 22 to a start position A. At position A, the vacuum pump 214 is turned on and suction forces are delivered over air hose 96 to manifold 94. The forces are distributed through bores 178, 180 to the underside of belt 48 so that the photosensitive material is adhered thereto. The lift mechanism 110, including lift motor 118, is then actuated so that tracks 90, 166 are lifted relative to side frames 60, 64; the lifting motion picks up the vacuum pick-up bar 88 so that the emulsion side of the photosensitive film is spaced a small distance above the plane of the platen. The drive mechanism 126, including reversible motor 128, drive sprocket 130, and chain 132, is then energized. The movement of the chain rotates rollers 50, 52 so that transport belt 48 is then advanced a calculated distance to station B with the lift assembly remaining in the raised position. A second motor 216 is then turned on and such motor drives a cable 218 which moves rotary cutter 220 across the photosensitive material. The vacuum pump 214 delivers suction forces to the manifold 94 and to the underside of the transport belt 48 all the time so the photosensitive sheet material adheres to the belt during the transport cycles. During the cut cycle the lift assembly still remains in the raised location. The drive assembly 126 rotates rollers 50, 52 to advance transport belt 48. The lifting assembly is then de-energized and the cut sheet of photosensitive material is positioned at station C. The entire cut sheet is now in contact with glass platen 22.

Placement of the cut length of photosensitive material at station C insures that the photosensitive material is centered upon the platen. After centering, three-way valve 222 terminates the suction forces flowing to transport belt 48, and directs such forces to a vacuum hold-down channel 223 that runs about the perimeter of platen 22. The suction forces present in channel 223 draw the cut length of photosensitive material F against the platen, and also pull flexible, opaque belt 48 snugly thereagainst. While the cut length of photosensitive material is pressed tightly against the platen, an exposure is made of the graphic arts materials placed upon the copyboard 24.

After the exposure, the suction forces to channel 223 are terminated. Switching valves 300, 301 momentarily will supply a positive airflow to channel 223 which will break the residual vacuum between belt 48 and platen 22. Then the airflow is directed to the gripper to provide suction forces via air hose 96. The cut sheet is then moved, in the raised position, with the belt toward rollers 28, 30. To move the belt the drive assembly 126 is activated to rotate rollers 50, 52 and the photosensitive material F is advanced to station D.

At station D, the lifting frame remains raised but the suction force to belt 48 is terminated after the cut sheet has entered the nip of rollers 28, 30 which at this point are stationary. The rollers 28, 30 then start rotating and the photosensitive material is directed toward transfer cartridge 34 (if a plate is to be made) or toward developer section 46. The drive assembly 126 is again energized by lugs 150, 152 on chain 132 cooperating with switches 156, 160 so that the direction of chain travel is reversed; the reversal of chain travel is transmitted to rollers 50, 52 so that the transport belt 48 is returned to its starting position, position A.

In order to insure the delivery of the suction forces produced by vacuum pump 214 to the manifold 94, or to the channel 223 or to be vented, at the proper time in the sequence of operations, a vent valve 224 is utilized in conjunction with three-way valve 222. Valves 222, 224 may be solenoid operated valves, responsive to timed control signals. A central processing unit provides the command signals to the lift assembly, drive assembly, vacuum pump, etc., to coordinate the timing for the diverse components of the daylight camera system, particularly the unique automatically operated vacuum feed system therefor.

Whereas a preferred embodiment of the vacuum feed system has been described above, numerous changes in such system will occur to the skilled artisan. The invention, for example, may find application in known cameras, X-ray equipment, photocopiers, and the like. While the transport belt may be made of a single ply of flexible plastic or rubber, the belt is usually formed of two, or more, plies of materials glued together. Also, a pivot pin 226 (FIG. 2) may be used for further adjustment of the belt frame and the belt with respect to glass platen 22.

Transport belt 48, per se, is of a unique construction. The body of the belt is a polyester fabric which approximates a fine mesh screen. Plastisol is sprayed, dipped, or otherwise applied to both surfaces of the fabric except for a "window" area within the belt. This window is rectangular in shape and is slightly larger in size than the platen of the camera system. The manifold 94 is secured to the belt within the confines of the window. When suction is applied to the manifold, the mesh enhances its gripping action. When suction is applied about the platen, the mesh facilitates the drawing down of the sheet of photosensitive material centered on the platen. The belt is preferably black in color to increase its ability to prevent stray light from entering the camera system. Because of its construction, the belt exhibits excellent conformance characteristics with regard to rollers 50, 52, and is almost air-tight when drawn down against the platen of the camera system.

## Claims

1. A camera system (10) including a supply (12) of photosensitive material (14), a platen (22) to receive the photosensitive material (14), a lens system (26) to expose the photosensitive material (14), and a processing station (46) for developing the exposed photosensitive material (14), in combination with a vacuum feed and hold down assembly which assembly comprises:
a) a first roller (50) located at one end of the platen (22) near said supply (12) and a second roller (52) located at the opposite end of the platen (22);
b) drive means (128,132) to drive said rollers;
c) a flexible, opaque transport belt (48) having one end attached to said first roller (50) and having its other end attached to the second roller (52) so that said transport belt can be advanced by said drive means (128,132), said belt (48) having an upper surface, not facing the photosensitive material (14) and a lower surface facing the photosensitive material (14);
d) a plurality of belt openings (186,188) formed through said transport belt (48);
e) a vacuum source comprising a vacuum pump (214); and
f) a conduit (96) for connecting said vacuum source with said plurality of belt openings (186,188);
characterized by
a vacuum pick-up bar (88) being secured to the upper surface of said transport belt (48), being arranged to be in a raised or a lowered position, and being joined to a manifold (94) having a central bore (176) connected to a plurality of channels (178,180) which are in alignment with the belt openings (186,188) so that, when said vacuum pump (214) is actuated, a vacuum is generated through said central bore (176) and said plurality of channels (178,180) between the lower surface of said transport belt (48) and the photosensitive material (14) to draw them together, during the advancement of said transport belt (48).

2. A camera system (10) in combination with a vacuum feed and hold down assembly as defined in claim 1 wherein a rigid belt frame is provided to maintain the transport belt parallel to the platen, said belt frame comprising a first side frame (60) placed at one side of the platen (22) in the direction of the advancement of the transport belt (48), a second side frame (64) placed at the other side of the platen (22) in the direction of advancement of the transport belt (48) and a plurality of cross-members (74,76,78) that extend laterally across the belt, at spaced intervals, to maintain said side frames parallel to each other.

3. A camera system (10) in combination with a vacuum feed and hold down assembly as defined in claim 2 wherein three cross-members (74,76,78) are utilized, two of said cross-members (74,78) being C-shaped channels.

4. A camera system (10) in combination with a vacuum feed and hold down assembly as defined in claim 2 wherein a plurality of support feet (82,86) is provided for said rigid belt frame, one foot being secured to each corner of said belt frame, each foot being adjustable in height so that said belt frame can be maintained parallel to said glass platen (22).

5. A camera system (10) in combination with a vacuum feed and hold down assembly as defined in claim 1 wherein a drive assembly is provided to impart rotational movement to said first and second rollers (50,52) to pay out, and take up, the transport belt (48), said first roller being mounted upon a first elongated shaft and said second roller being mounted upon a second elongated shaft said drive assembly including a motor, a sprocket (130) driven by said motor (128), a first idler secured to said first elongated shaft (56) and second idler secured to said second elongated shaft (70), an endless chain (132) trained about said sprocket and said idlers, and means for driving said chain, alternately in a first direction to pay out said transport belt and in a second direction to take up said transport belt.

6. A camera system (10) in combination with a vacuum feed and hold down assembly as defined in claim 5 wherein said means for driving said chain in said first and second directions includes lugs (150,152) projecting from said chain and a pair of switches positioned in the path of movement of said lugs, one of said switches being tripped when the chain moves in one direction and the other of said switches being tripped when the chain moves in the opposite direction.

7. A camera system (10) in combination with a vacuum feed and hold down assembly as defined in claim 5 wherein said motor (128) is a reversible motor, and an elastic coupling is provided between said first elongated shaft and the roller secured thereto.

8. A camera system (10) in combination with a vacuum feed and hold down assembly as defined in claim 1 wherein said transport belt is black in color, is larger than the glass platen of the camera, and is executed in a material that is supple and can conform to the curvature of the first and second rollers about which it is wrapped.

9. A camera system (10) in combination with a vacuum feed and hold down assembly as defined in claim 8 wherein said transport belt is formed of multiple plies of a plastic material joined together.

10. A camera system (10) in combination with a vacuum feed and hold down assembly as defined in claim 1 wherein said vacuum pick-up bar (88) extends laterally across the width of said transport belt (48), one end of said bar terminating in an upstruck ear and the other end of said bar terminating in a second upstruck ear.

11. A camera system (10) in combination with a vacuum feed and hold down assembly as defined in claim 10 wherein a first side frame (60) is placed at one side of the platen (22) in the direction of advancement of the transport belt (48), a second side frame (64) is placed at the other side of the platen (22) in the direction of advancement of the transport belt (48), a first C-shaped longitudinally extending track (90), is provided along one side of the platen (22) and a second C-shaped longitudinally extending track (166) is provided along the opposite side of said platen (22), one ear on said vacuum pick-up bar (88) resting on said first track and the second ear of said vacuum pick-up bar resting on said second track, whereby said vacuum pick-up bar (88) can slide freely along said tracks (90,166) as said transport belt (48) is paid out, and taken up, upon said first and second rollers (50,52).

12. A camera system (10) in combination with a vacuum feed and hold down assembly as defined in claim 11 wherein lift means are provided to elevate said first and second tracks (90,166) and said vacuum pick-up bar (88) suspended therefrom.

13. A camera system (10) in combination with a vacuum feed and hold down assembly as defined in claim 12 wherein spacer bars (98,100) extend between said first and second tracks (90,166) to maintain same parallel and in alignment, and said lift means are secured to one of said spacer bars (98,100).

14. A camera system (10) in combination with a vacuum feed and hold down assembly as defined in claim 13 wherein said lift means includes a lift motor (118), and a drive link (122) secured between said lift motor and one of said spacer bars (98,100) to achieve upward and downward movement of said tracks.

15. A camera system (10) in combination with a vacuum feed and hold down assembly as defined in claim 14 wherein said lift means further includes a cam (120) and a switch (116) actuated by said cam for controlling the operation of said lift motor (118).

16. A camera system (10) in combination with a vacuum feed and hold down assembly as defined in claim 12 wherein said lift means includes a plurality of lift links (102,106) secured between said side frames and said tracks so that said tracks can be moved relative to said side frames.

17. A camera system (10) in combination with a vacuum feed and hold down assembly as defined in claim 16 wherein said lift means include first and second lift links (102,106) which are secured between one of said side frames and said first track disposed inboard thereof, and third and fourth lift links which are secured between the other one of said side frames and said second track disposed inboard thereof.

18. A camera system (10) in combination with a vacuum feed and hold down assembly as defined in claim 1 wherein a channel is formed around the perimeter of said platen (22), and said vacuum pump (214) is arranged to provide vacuum either to said manifold (94) or to said channel.

19. A camera system (10) in combination with a vacuum feed and hold down assembly as defined in claim 18 wherein solenoid operated valves (222,224) are disposed between said vacuum pump and said manifold and said channel, said valves controlling the vacuum generated by said vacuum pump.

20. A camera system (10) in combination with a vacuum feed and hold down assembly as defined in claim 1 wherein said flexible opaque transport belt is formed of a laminate of polyester fabric coated with plastisol.

21. A camera system (10) in combination with a vacuum feed and hold down assembly as defined in claim 20 wherein a selected area of said belt consists only of polyester fabric so that said selected area can be drawn tightly against the platen of the camera system.

## Patentansprüche

1. Kamerasystem (10) mit einer Zufuhr (12) von lichtempfindlichem Material (14), einer Auflageplatte (22) zur Aufnahme des lichtempfindlichen Materials (14), ein Linsensystem (26) zur Belichtung des lichtempfindlichen Materials (14), und eine Behandlungsstation (40) zur Entwicklung des belichteten lichtempfindlichen Materials (14), in Kombination mit einer Vakuumzuführ- und -halteanordnung, wobei diese Anordnung folgendes umfaßt:
a) eine erste Walze (50), die sich an einem Ende der Auflageplatte (22) nahe der Zufuhr (12) befindet, und eine zweite Walze (52), die sich an dem gegenüberliegenden Ende der Auflageplatte (22) befindet,
b) Antriebsmittel (128, 132) zum Antreiben der Walzen,
c) ein flexibles, lichtundurchlässiges Transportband (48), das mit einem Ende an der ersten Walze (50) und mit seinem anderen Ende an der zweiten Walze (52) angebracht ist, so daß das Transportband von den Antriebsmitteln (128, 132) vorwärts bewegt werden kann, wobei das Band (48) eine obere Fläche, die dem lichtempfindlichen Material (14) nicht gegenüberliegt, und eine untere Fläche aufweist, die dem lichtempfindlichen Material (14) gegenüberliegt,
d) eine Vielzahl von Bandöffnungen (186, 188), die durch das Transportband (48) hindurch ausgebildet sind,
e) eine Vakuumquelle, die eine Vakuumpumpe (214) umfaßt, und
f) eine Leitung (96) zur Verbindung der Vakuumquelle mit der Vielzahl von Bandöffnungen (186, 188),
gekennzeichnet durch
eine Vakuumaufnehmerstange (88), die an der oberen Fläche des Transportbandes (48) befestigt ist, die so angeordnet ist, daß sie sich in einer erhöhten oder herabgelassenen Lage befindet, und die mit einem Verteilungsrohr (94) verbunden ist, das eine zentrale Bohrung (176) aufweist, die mit einer Vielzahl von Kanälen (178, 180) verbunden ist, die auf die Bandöffnungen (186, 188) ausgerichtet sind, so daß bei Betätigung der Vakuumpumpe (24) durch die zentrale Bohrung (176) und die Vielzahl von Kanälen (178, 180) zwischen der unteren Fläche des Transportbandes (48) und dem lichtempfindlichen Material (14) ein Vakuum erzeugt wird, um diese während der Vorwärtsbewegung des Transportbandes (48) zusammenzuziehen.

2. Kamerasystem (10) in Kombination mit einer Vakuumzuführ- und -halteanordnung nach Anspruch 1, bei dem ein starrer Bandrahmen vorgesehen ist, um das Transportband parallel zu der Auflageplatte zu halten, wobei der Bandrahmen einen ersten Seitenrahmen (60), der sich auf einer Seite der Auflageplatte (22) in der Richtung der Vorwärtsbewegung des Transportbandes (48) befindet, einen zweiten Seitenrahmen (64), der sich auf der anderen Seite der Auflageplatte (22) in der Richtung der Vorwärtsbewegung des Transportbandes (48) befindet, und eine Vielzahl von Querträgern (74, 76, 78) umfaßt, die sich seitlich quer zu dem Band in einem Abstand zueinander mit Zwischenraum erstrecken, um die Seitenrahmen parallel zueinander zu halten.

3. Kamerasystem (10) in Kombination mit einer Vakuumzuführ- und -halteanordnung nach Anspruch 2, bei dem drei Querträger (74, 76, 78) verwendet werden, wobei zwei dieser Querträger (74, 78) C-förmige Kanäle sind.

4. Kamerasystem (10) in Kombination mit einer Vakuumzuführ- und -halteanordnung nach Anspruch 2, bei dem eine Vielzahl von Stützfüßen (82, 86) für den starren Bandrahmen vorgesehen ist, wobei ein Fuß an jeder Ecke des Bandrahmens befestigt ist und jeder Fuß in der Höhe einstellbar ist, so daß der Bandrahmen parallel zu der Glasauflageplatte (22) gehalten werden kann.

5. Kamerasystem (10) in Kombination mit einer Vakuumzuführ- und -halteanordnung nach Anspruch 1, bei dem eine Antriebsanordnung vorgesehen ist, die den ersten und zweiten Walzen (50, 52) eine Rotationsbewegung erteilt, um das Transportband (48) auszugeben bzw. aufzunehmen, wobei die erste Walze an einer ersten langgestreckten Welle angebracht ist und die zweite Walze an einer zweiten langgestreckten Welle angebracht ist, wobei die Antriebsanordnung einen Motor, eine Zahnrolle (130), die von dem Motor (128) angetrieben wird, eine erste Spannrolle, die an der ersten langgestreckten Welle (56) angebracht ist, sowie eine zweite Spannrolle, die an der zweiten langgestreckten Welle (70) angebracht ist, eine Endloskette (132), die um die Zahnrolle und die Spannrollen herum aufgezogen ist und Mittel umfaßt, die die Kette abwechselnd in einer ersten Richtung zur Ausgabe des Transportband und in einer zweiten Richtung zur Aufnahme des Transportbands antreiben.

6. Kamerasystem (10) in Kombination mit einer Vakuumzuführ- und -halteanordnung nach Anspruch 5, bei dem die Mittel zum Antreiben der Kette in den ersten und zweiten Richtungen Nasen (150, 152), die von der Kette abstehen, und ein Paar von Schaltern umfassen, die sich in dem Bewegungspfad der Nasen befinden, wobei einer der Schalter geschaltet wird, wenn sich die Kette in einer Richtung bewegt, und der andere der Schalter geschaltet wird, wenn sich die Kette in die andere Richtung bewegt.

7. Kamerasystem (10) in Kombination mit einer Vakuumzuführ- und -halteanordnung nach Anspruch 5, bei dem der Motor (128) ein reversibler Motor ist, und eine elastische Kupplung zwischen der ersten langgestreckten Welle und der daran angebrachten Walze vorgesehen ist.

8. Kamerasystem (10) in Kombination mit einer Vakuumzuführ- und -halteanordnung nach Anspruch 1, bei dem das Transportband eine schwarze Farbe aufweist, größer als die Glasauflageplatte der Kamera ist und aus einem Material hergestellt ist, das geschmeidig ist und sich der Rundung der ersten und zweiten Walzen anpassen kann, um die es gewickelt wird.

9. Kamerasystem (10) in Kombination mit einer Vakuumzuführ- und -haltevorrichtung nach Anspruch 8, bei dem das Transportband aus einer Vielzahl von Schichten eines zusammengefügten Kunststoffmaterials gebildet wird.

10. Kamerasystem (10) in Kombination mit einer Vakuumzuführ- und -halteanordnung nach Anspruch 1, bei dem sich die Vakuumaufnehmerstange (88) seitlich quer zu der Breite des Transportbandes (48) erstreckt, wobei ein Ende der Stange in einem nach oben gerichteten Henkel endet und das andere Ende der Stange in einem zweiten nach oben gerichteten Henkel endet.

11. Kamerasystem (10) in Kombination mit einer Vakuumzuführ- und -halteanordnung nach Anspruch 10, bei dem ein erster Seitenrahmen (60) an einer Seite der Auflageplatte (22) in der Richtung der Vorwärtsbewegung des Transportbandes (48) angeordnet ist, ein zweiter Seitenrahmen (64) auf der anderen Seite der Auflageplatte (22) in der Richtung der Vorwärtsbewegung des Transportbandes (48) angeordnet ist, eine erste C-förmige, sich in Längsrichtung erstreckende Führungsbahn (90) entlang einer Seite der Auflageplatte (22) vorgesehen ist, und eine zweite C-förmige, sich in Längsrichtung erstreckende Führungsbahn (166) entlang der gegenüberliegenden Seite der Auflageplatte (22) vorgesehen ist, wobei ein Henkel auf dieser Vakuumaufnehmerstange (88) auf der ersten Führungsbahn ruht und der zweite Henkel der Vakuumaufnehmerstange auf der zweiten Führungsbahn ruht, wodurch die Vakuumaufnehmerstange (88) frei entlang dieser Führungsbahnen (90, 166) gleiten kann, wenn das Transportband (48) von den ersten und zweiten Walzen (50, 52) ausgegeben und aufgenommen wird.

12. Kamerasystem (10) in Kombination mit einer Vakuumzuführ- und -halteanordnung nach Anspruch 11, bei dem Hebemittel vorgesehen sind, um die ersten und zweiten Führungsbahnen (90, 166) hochzuheben und die Vakuumaufnehmerstange (88) davon herunterhängen zu lassen.

13. Kamerasystem (10) in Kombination mit einer Vakuumzuführ- und -halteanordnung nach Anspruch 12, bei dem sich Abstandhaltestäbe (98, 100) zwischen den ersten und zweiten Führungsbahnen (90, 166) erstrecken, um diese parallel und in Ausrichtung zu halten, und bei dem die Hebemittel an einem der Abstandhaltestäbe (98, 100) befestigt sind.

14. Kamerasystem (10) in Kombination mit einer Vakuumzuführ- und -halteanordnung nach Anspruch 13, bei dem das Hebemittel einen Motor (118) für das Hochheben und ein Antriebsverbindungsglied (122) umfaßt, das zwischen dem Motor für das Hochheben und einem der Abstandhaltestäbe (98, 100) befestigt ist, um die Aufwärts- und Abwärtsbewegung der Führungsbahnen zu erreichen.

15. Kamerasystem (10) in Kombination mit einer Vakuumzuführ- und -halteanordnung nach Anspruch 14, bei dem das Hebemittel desweiteren eine Nocke (120) und einen durch diese Nocke betätigten Schalter (116) zur Steuerung des Betriebs des Motors (118) für das Hochheben umfaßt.

16. Kamerasystem (10) in Kombination mit einer Vakuumzuführ- und -halteanordnung nach Anspruch 12, bei dem das Hebemittel eine Vielzahl von Hebeverbindungsgliedern (102, 106) umfaßt, die zwischen den Seitenrahmen und den Führungsbahnen angebracht sind, damit die Führungsbahnen relativ zu den Seitentrahmen bewegt werden können.

17. Kamerasystem (10) in Kombination mit einer Vakuumzuführ- und -haltevorrichtung nach Anspruch 16, bei dem die Hebemittel erste und zweite Hebeverbindungsglieder (102, 106), die zwischen einem der Seitenrahmen und der ersten Führungsbahn angebracht sind, die sich nach innen gerichtet davon befindet, und dritte und vierte Hebeverbindungsglieder umfassen, die zwischen dem anderen Seitenrahmen und der zweiten Führungsbahn angebracht sind, die sich nach innen gerichtet davon befindet.

18. Kamerasystem (10) in Kombination mit einer Vakuumzuführ- und -halteanordnung nach Anspruch 1, bei dem ein Kanal um den Umfang der Auflageplatte (22) gebildet und die Vakuumpumpe (214) so angeordnet ist, daß sie ein Vakuum entweder an das Verteilungsrohr (94) oder an den Kanal liefert.

19. Kamerasystem (10) in Kombination mit einer Vakuumzuführ- und -halteanordnung nach Anspruch 18, bei dem sich solenoidbetätigte Ventile (222, 224) zwischen der Vakuumpumpe und dem Verteilungsrohr und dem Kanal befinden, wobei diese Ventile das von der Vakuumpumpe erzeugte Vakuum regulieren.

20. Kamerasystem (10) in Kombination mit einer Vakuumzuführ- und -halteanordnung nach Anspruch 1, bei dem das flexible, lichtundurchlässige Transportband aus einem Laminat aus Polyestergewebe gebildet ist, das mit Plastisol überzogen ist.

21. Kamerasystem (10) in Kombination mit einer Vakuumzuführ- und -halteanordnung nach Anspruch 20, bei dem ein ausgewählter Bereich des Bandes nur aus Polyestergewebe besteht, so daß dieser ausgewählte Bereich eng gegen die Auflageplatte des Kamerasystems gezogen werden kann.

## Revendications

1. Système de caméra (10) comprenant une amenée (12) de matériau photosensible (14), une plaque (22) pour recevoir le matériau photosensible (14), un système de lentilles (26) pour exposer le matériau photosensible (14) et une station de traitement (46) pour développer le matériau photosensible exposé (14), en combinaison avec un ensemble d'alimentation à dépression et de maintien, ledit ensemble comprenant:
a) un premier rouleau (50) positionné à une extrémité de la plaque (22) proche de ladite amenée (12) et un deuxième rouleau (52) positionné à l'extrémité opposée de la plaque (22);
b) des moyens d'entraînements (128, 132) pour entraîner lesdits rouleaux;
c) une courroie de transport flexible, opaque (48) dont une extrémité est fixée audit premier rouleau (50) et dont l'autre extrémité est fixée audit deuxième rouleau (52) de sorte que lesdits moyens d'entraînements (128, 132), peuvent faire avancer ladite courroie de transport, ladite courroie (48) présentant une surface supérieure, qui n'est pas orientée vers le matériau photosensible (14) et une surface inférieure orientée vers ledit matériau photosensible (14);
d) une pluralité d'ouvertures de courroie (186, 188) pratiquées à travers ladite courroie de transport (48);
e) une source à vide comprenant une pompe à vide (214); et
f) un conduit (96) pour connecter ladite source à vide avec ladite pluralité d'ouvertures de courroie (186, 188);
caractérisé par
une barre de saisie à vide (88) qui est fixée à la surface supérieure de ladite courroie de transport (48), agencée pour être dans une position relevée ou abaissée, et reliée à un distributeur (94) possédant un perçage central (176) connecté à une pluralité de canaux (178, 180) qui sont en alignement avec les ouvertures de courroie (186, 188) de sorte que lorsque ladite pompe à vide (214) est actionnée, un vide est crée à travers ledit perçage central (176) et ladite pluralité de canaux (178, 180), entre la surface inférieure de ladite courroie de transport (48) et le matériau photosensible (14) afin de les tirer l'un vers l'autre, pendant l'avancement de ladite courroie de transport (48).

2. Système de caméra (10) en combinaison avec un ensemble d'alimentation à dépression et de maintien tel que défini dans la revendication 1, dans lequel un cadre de courroie rigide est prévu pour maintenir la courroie de transport parallèle à la plaque, ledit cadre de courroie comprenant un premier cadre latéral (60) placé sur un côté de la plaque (22) ,dans la direction d'avance de la courroie de transport (48), un deuxième cadre latéral (64) placé de l'autre côté de la plaque (22) dans la direction d'avance de la courroie de transport (48) et une pluralité de traverses (74, 76, 78) qui s'étendent latéralement à travers la courroie, à des intervalles espacés, pour maintenir lesdits cadres latéraux parallèles les uns aux autres.

3. Système de caméra (10) en combinaison avec un ensemble d'alimentation à dépression et de maintien tel que défini dans la revendication 2, dans lequel trois traverses (74, 76, 78) sont utilisées, deux desdites traverses (74, 78) se présentant sous la forme de canaux en forme de C.

4. Système de caméra (10) en combinaison avec un ensemble d'alimentation à dépression et de maintien tel que défini dans la revendication 2, dans lequel une pluralité de pieds de support (82, 86) est prévu pour ledit cadre de courroie rigide, un pied étant fixé à chaque coin dudit cadre de courroie, chaque pied étant réglable en hauteur de sorte que ledit cadre de courroie peut être maintenu parallèle à ladite plaque de verte (22).

5. Système de caméra (10) en combinaison avec un ensemble d'alimentation à dépression et de maintien tel que défini dans la revendication 1, dans lequel un ensemble d'entraînement est prévu pour communiquer un mouvement de rotation auxdits premier et deuxième rouleaux (50, 52) afin de dérouler et d'enrouler la courroie de transport (48), ledit premier rouleau étant monté sur un premier arbre allongé et ledit deuxième rouleau étant monté sur un deuxième arbre allongé, ledit ensemble d'entraînement comprenant un moteur, une dent de pignon (130) entraînée par ledit moteur (128), un premier rouleau fixé audit premier arbre allongé (56) et un deuxième rouleau fixé audit deuxième arbre allongé (70), une chaîne sans fin (132) entraînée autour de ladite dent de pignon et lesdits rouleaux, et des moyens pour entraîner ladite chaîne, alternativement suivant une première direction pour dérouler ladite courroie de transport et dans une deuxième direction pour enrouler ladite courroie de transport.

6. Système de caméra (10) en combinaison avec un ensemble d'alimentation à dépression et de maintien tel que défini dans la revendication 5, dans lequel lesdits moyens pour entraîner ladite chaîne suivant lesdites première et deuxième directions comprend des pattes (150, 152) faisant saillie à partir de ladite chaîne et une paire de commutateurs positionnés dans le trajet de déplacement desdites pattes, l'un desdits commutateurs étant déclenché lorsque la chaîne se déplace dans une direction et l'autre desdits commutateurs étant déclenché lorsque la chaîne se déplace dans la direction opposée.

7. Système de caméra (10) en combinaison avec un ensemble d'alimentation à dépression et de maintien tel que défini dans la revendication 5, dans lequel ledit moteur (128) est un moteur réversible, et un accouplement élastique est réalisé entre ledit premier arbre allongé et le rouleau fixé à celui-ci.

8. Système de caméra (10) en combinaison avec un ensemble d'alimentation à dépression et de maintien tel que défini dans la revendication 1, dans lequel ladite courroie de transport est de couleur noire, est plus grande que la plaque en verte de la caméra et est réalisée en un matériau qui est souple et peut s'adapter à la courbure des premier et deuxième rouleaux autour desquels elle est enroulée.

9. Système de caméra (10) en combinaison avec un ensemble d'alimentation à dépression et de maintien tel que défini dans la revendication 8, dans lequel ladite courroie de transport est réalisée à partir de couches multiples de matériau plastique assemblé.

10. Système de caméra (10) en combinaison avec un ensemble d'alimentation à dépression et de maintien tel que défini dans la revendication 1, dans lequel ladite barre de saisie à vide (88) s'étend latéralement à travers la largeur de ladite courroie de transport (48), une extrémité de ladite barre se terminant dans une oreille ascendante et l'autre extrémité de ladite barre se terminant dans une deuxième oreille ascendante.

11. Système de caméra (10) en combinaison avec un ensemble d'alimentation à dépression et de maintien tel que défini dans la revendication 10, dans lequel un premier cadre latéral (60) est placé à un côté de la plaque (22) dans la direction d'avance de la courroie de transport (48), un deuxième cadre latéral (64) est placé de l'autre côté de la plaque (22) dans la direction d'avance de la courroie de transport (48), une première piste (90) s'étendant longitudinalement en forme de C est réalisée le long d'un côté de la plaque (22) et une deuxième piste (166) s'étendant longitudinalement en forme de C est réalisée le long du côté opposé de ladite plaque (22), une oreille sur ladite barre de saisie à vide (88) restant sur ladite première piste et la deuxième oreille de ladite barre de saisie à vide restant sur ladite deuxième piste, par quoi ladite barre de saisie à vide (88) peut coulisser librement le long desdites pistes (90, 166) lorsque ladite courroie de transport (48) est déroulée, et enroulée sur lesdits premier et deuxième rouleaux (50, 52).

12. Système de caméra (10) en combinaison avec un ensemble d'alimentation à dépression et de maintien tel que défini dans la revendication 11, dans lequel des moyens de soulèvement sont prévus pour élever lesdites première et deuxième pistes (90, 166) et ladite barre de saisie à vide (188) suspendue depuis celles-ci.

13. Système de caméra (10) en combinaison avec un ensemble d'alimentation à dépression et de maintien tel que défini dans la revendication 12, dans lequel des barres d'écartement (98, 100) s'étendent entre lesdites première et deuxième pistes (90, 166) pour maintenir celles-ci en parallèle et en alignement, et lesdits moyens de soulèvement sont fixés à l'une desdites barres d'espacement (98, 100).

14. Système de caméra (10) en combinaison avec un ensemble d'alimentation à dépression et de maintien tel que défini dans la revendication 13, dans lequel lesdites moyens de soulèvement comprennent un moteur de soulèvement (118) et une liaison d'entraînement (122) fixée entre ledit moteur de soulèvement et l'une desdites barres d'espacement (98, 100) pour réaliser un mouvement ascendant et descendant desdites pistes.

15. Système de caméra (10) en combinaison avec un ensemble d'alimentation à dépression et de maintien tel que défini dans la revendication 14, dans lequel lesdits moyens de soulèvement comprennent en outre une came (120) et un commutateur (116) actionné par ladite came pour contrôler le fonctionnement dudit moteur de soulèvement (118).

16. Système de caméra (10) en combinaison avec un ensemble d'alimentation à dépression et de maintien tel que défini dans la revendication 12, dans lequel lesdits moyens de soulèvement comprennent une pluralité de liaisons de soulèvement (102, 106) fixées entre lesdits cadres latéraux et lesdites pistes de sorte que lesdites pistes peuvent se déplacer relativement auxdits cadres latéraux.

17. Système de caméra (10) en combinaison avec un ensemble d'alimentation à dépression et de maintien tel que défini dans la revendication 16, dans lequel lesdits moyens de soulèvement comprennent des première et deuxième liaisons de soulèvement (102, 106) qui sont fixées entre l'un desdits cadres latéraux et ladite première piste disposée à l'intérieur de ceux-ci et des troisième et quatrième liaisons de soulèvement qui sont fixées entre l'autre desdits cadres latéraux et ladite deuxième piste disposée à l'intérieur de ceux-ci.

18. Système de caméra (10) en combinaison avec un ensemble d'alimentation à dépression et de maintien tel que défini dans la revendication 1, dans lequel un canal est formé autour du périmètre de ladite plaque (22), et ladite pompe à vide (214) est prévue pour réaliser un vide soit vers ledit distributeur (94) ou vers ledit canal.

19. Système de caméra (10) en combinaison avec un ensemble d'alimentation à dépression et de maintien tel que défini dans la revendication 18, dans lequel des valves actionnées par solénoïde (222, 224) sont disposées entre ladite pompe à vide et ledit distributeur et ledit canal, lesdites valves contrôlant le vide produit par ladite pompe à vide.

20. Système de caméra (10) en combinaison avec un ensemble d'alimentation à dépression et de maintien tel que défini dans la revendication 1, dans lequel ladite courroie de transport flexible opaque est réalisée à partir d'un stratifié de tissu polyester revêtu avec de plastisol.

21. Système de caméra (10) en combinaison avec un ensemble d'alimentation à dépression et de maintien tel que défini dans la revendication 20, dans lequel une zone choisie de ladite courroie est constituée seulement de tissu polyester de sorte que ladite zone choisie peut être tirée de manière serrée contre la plaque dudit système de caméra.
